# EUROPEAN PATENT APPLICATION

(11) **EP 3 200 142 A1**
(43) Date of publication of application: **02.08.2017**
(21) Application number: 17153653.5
(22) Date of filing: 29.01.2017
(51) Int. Cl.: G06Q 30/02

(54) **PRODUCT DATA MANAGEMENT SYSTEM**

(30) Priority: 29.01.2016 US 201662288749 P
(71) Applicant: Pilarz, Marcin, 02-670 Warszawa (PL)
(72) Inventor: Pilarz, Marcin, 02-670 Warszawa (PL)
(74) Representative: Górska, Anna

(57) **Abstract**

Dual mode RFID product tags, which function on both UHF and NFC frequencies, are employed in a product data management system. The UHF component provides electronic article surveillance and inventory management functionality and is disabled at the point of purchase. The NFC component functions, in conjunction with a potential customer's NFC reader, to obtain pre-purchase product information prior to selection for purchase and after purchase, for obtaining post -purchase functionality, such as, merchant or manufacturer incentive loyalty reward points, product warranty registration, etc.

## Description

### Field of the Invention

The present invention relates generally to retail merchandising and more specifically to a system for merchant inventory control as well as customer access for product data and purchase loyalty incentives.

### Antecedents of the Invention

Brick and mortar retail store merchants suffer a number of disadvantages over online merchants. Among such disadvantages are staffing expenditures associated with inventory control and responding to customer product inquiries. Inventory loss due to shoplifting remains a significant expense. Present security systems generally rely on cameras with remote monitoring personnel as well as security personnel on the selling floor. Some antitheft systems include magnetic field tags attached to products which trigger sensors at the store exit. At times, removal of the tags by a cashier often delayed customer checkout and customers often encountered long checkout lines.

A need for improved electronic article surveillance for inventory recordkeeping and loss prevention with minimal staffing requirements was evident.

There was also a need for a simplified system for customer access to product information, eg., assembly instructions, owner manuals, operating instructions, warranty information, etc., in advance of purchase and without the need for salesperson assistance as well as a need for simplified customer access to manufacturer or merchant incentive reward programs and simplified product warranty registration after purchase.

### Summary of the Invention

The present invention employs dual mode RFID product tags which function on both UHF and (HF) NFC frequencies. The UHF component provides electronic article surveillance (EAS) functionality and is disabled at the point of purchase. The NFC component functions, in conjunction with a potential customer's NFC reader, to obtain product information prior to selection for purchase and after purchase, for obtaining merchant or manufacturer incentive loyalty reward points, for product warranty registration, etc.

From the foregoing compendium, it will be appreciated that an aspect of the present invention is to provide a product data management system of the general character described which is not subject to the foregoing disadvantages of the antecedents of the invention.

A feature of the present invention is to provide a product data management system of the general character described which is easy to use.

A consideration of the present invention is to provide a product data management system of the general character described with increased accuracy and efficiency.

Another aspect of the present invention is to provide a product data management system of the general character described which reduces the number of customer service personnel required for operation of a retail facility.

An additional feature of the present invention is to provide a product data management system of the general character described wherein RFID tags affixed to products are accessed by prospective customers through an NFC enabled hand carried smart device to retrieve product specific data.

A further consideration of the present invention is to provide a product data management system of the general character described for a retail environment wherein RFID tags affixed to products are accessed by prospective customers through an NFC enabled hand carried smart device while UHF enabled equipment accesses the RFID tags for electronic article monitoring, e.g., surveillance, inventory management, etc.

To provide a product data management system of the general character described wherein a dual mode RFID tag includes a UHF component for electronic article surveillance and inventory management functionality and an NFC component for customer access to purchase incentive data, with the UHF component being deactivated at the time of purchase is another aspect of the present invention.

A still further feature of the present invention is to provide a product data management system of the general character described wherein RFID tags affixed to products are accessed after purchase by customers through an NFC enabled hand carried smart device to retrieve loyalty rewards and/or for product warranty registration.

Other aspects, features and considerations of the present invention in part will be obvious and in part will be pointed out hereinafter.

With these ends in view, the invention finds embodiment in various combinations of elements, arrangements of parts and series of steps by which the above-mentioned aspects, features and considerations and certain other aspects, features and considerations are attained, or with reference to the accompanying drawings and the scope of which will be more particularly pointed out and indicated in the appended claims.

### Brief Description of the Drawings

In the accompanying drawings, wherein some of the various possible exemplary embodiments of the invention are shown:
FIG. 1 is a schematized illustration of a dual mode RFID tag programmed with a product identification code and retrievable product information being stored in a cloud based system in accordance with the present invention;
FIG. 2 is a schematized illustration of the RFID tag affixed to a product and being monitored in a retail environment by UHF equipment for electronic article surveillance;
FIG. 3 is a schematized illustration of the RFID tag affixed to a product being accessed for stocktaking through an employee's handheld UHF device;

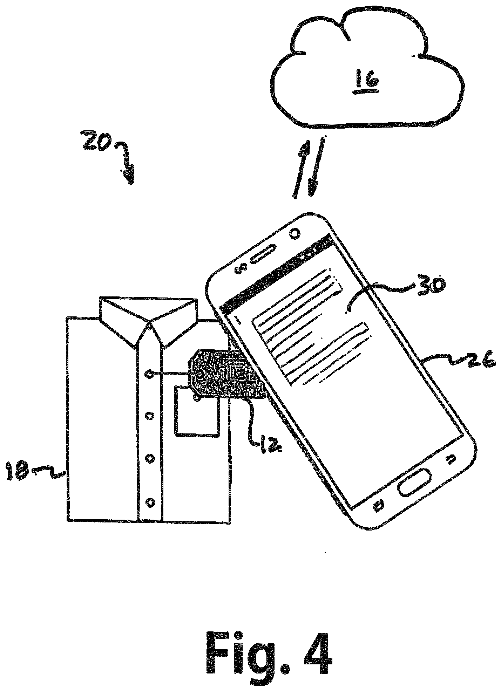

FIG. 4 is a schematized illustration of the RFID tag being accessed by a prospective purchaser's NFC enabled smart device;

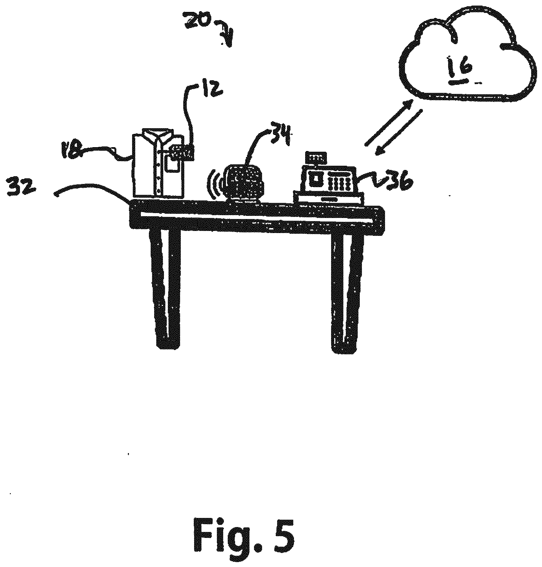

FIG. 5 is a schematized illustration of a purchase transaction wherein the product is paid for and the UHF functionality is disabled; and
FIG. 6 is a schematized illustration of the RFID tag being accessed by a purchaser's NFC enabled smart device to retrieve loyalty rewards and incentives and for warranty registration.

### Description of the Preferred Embodiment

The present invention will now be described in detail with reference to the drawings, which are provided as illustrative examples of the invention so as to enable those skilled in the art to practice the invention. Notably, the figures and examples below are not meant to limit the scope of the present invention to a single embodiment, but other embodiments are possible by way of interchange of some or all of the described or illustrated elements.

Where certain elements of the present invention can be partially or fully implemented using known components, only those portions of such known components that are necessary for an understanding of the present invention will be described, and detailed descriptions of other portions of such known components will be omitted so as not to obscure the invention. In the present specification, an embodiment showing a singular component should not be considered limiting; rather, the invention is intended to encompass other embodiments including a plurality of the same component, and vice-versa, unless explicitly stated otherwise herein.

Moreover, applicant does not intend for any term in the specification or claims to be ascribed an uncommon or special meaning unless explicitly set forth as such. Further, the present invention encompasses present and future known equivalents to the known components referred to herein by way of illustration.

Referring now in detail to the drawings, the reference numeral 10 denotes generally a product data management system in accordance with and embodying the present invention. Pursuant to the invention, a dual frequency RFID tag 12 functions on both UHF frequencies (800-999 Mhz) and HF-NFC (near field communication) frequencies (13.56 Mhz).

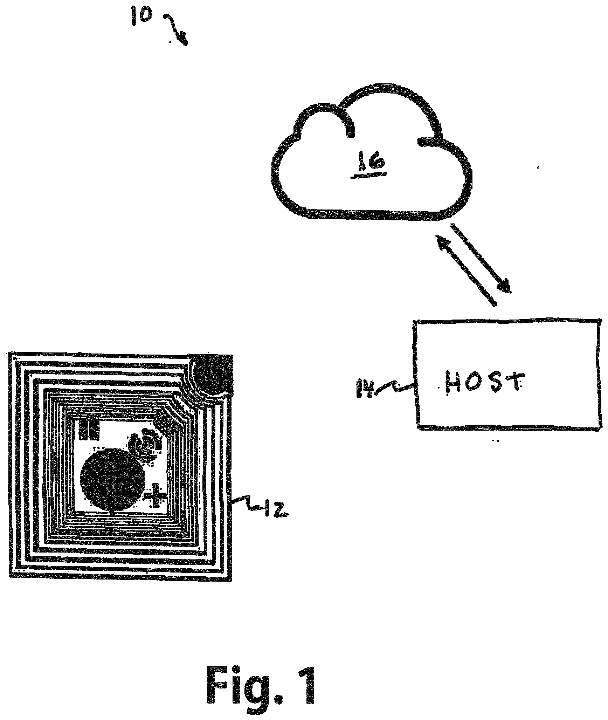

As illustrated in FIG. 1, the RFID tag 12 is programmed with an electronic product code (EPC) and associated retrievable product data including pre-purchase product information e.g., price, warranty terms, user manuals, installation instructions, is stored in a cloud based system 16 by a host 14. The cloud based system 16 is also programmed with retrievable post purchase functionality, e.g., product warranty registration, loyalty purchase rewards, proof of purchase, etc.

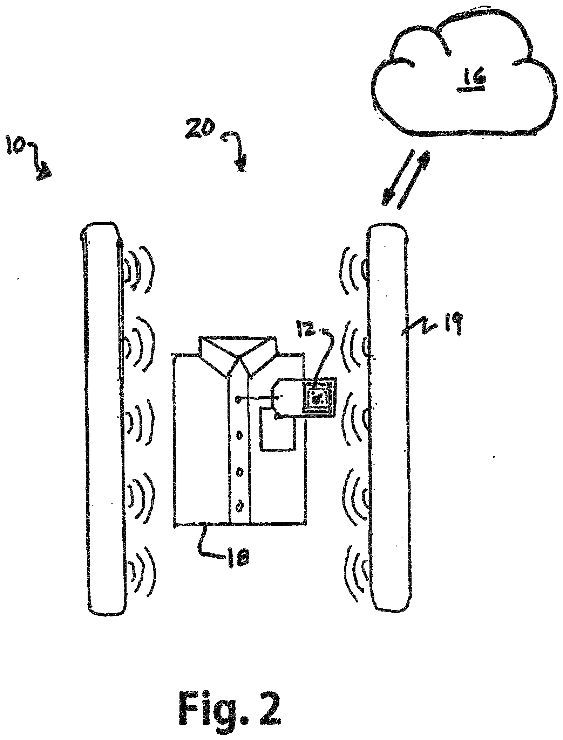

The RFID tag 12 is affixed to a product 18, prior or upon delivery to a retail shopping environment 20. At the retail shopping environment, the UHF component of the RFID tag 12 is monitored by stationary UHF equipment 19 for electronic article surveillance (EAS) anti-theft, as well as for inventory management, including shelf or rack location within the retail shopping environment, etc. The retrieved data is transmitted to and stored in the cloud based system16, as depicted in FIG. 2.

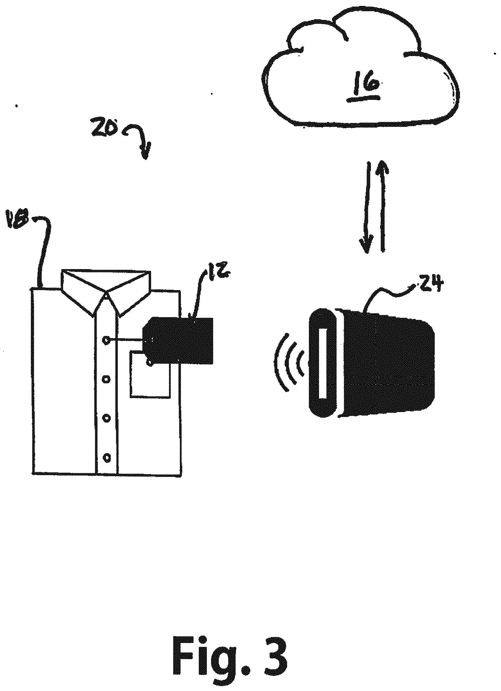

As illustrated in FIG. 3, the RFID tag 12 affixed to the product18 can also be accessed for inventory management through an employee's handheld UHF device 24. The data retrieved by the handheld UHF device 24 is transmitted to and stored in the cloud based system16.

Pursuant to the invention, the pre-purchase product information data e.g., price, warranty terms, user manuals, installation instructions, etc., stored in the cloud based system 16 and associated with the product 18 can be downloaded to and accessed by a prospective purchaser's NFC enabled device 26, such as a smartphone, tablet, PDA, etc., provided with an app for reading the tag 12. After the RFID tag 12 has been read, the NFC device 26 is enabled to communicate with the cloud based system 16 through a Wi-Fi network, a mobile network, e.g. LTE, etc., and downloads pre-purchase product specific information 30, which might comprise marketing communications, product specific coupon or discount information, an owner's manual, installation instructions, assembly instructions and possibility proof of the product's authenticity, etc.

If a purchase is to be made, the purchaser brings the product 18 to a checkout counter 32 where the transaction is completed and the UFC component or segment of the RFID tag 12 is disabled by a UHF device 34 which generates a kill command signal. The sale data is transmitted to the cloud based system and a proof of sale/purchase is generated for the merchant, distributor or manufacturer.

A flag in the tag memory is simultaneously switched at the point of purchase to indicate that the product 18 has been purchased to enable access to post purchase functionality associated with the RFID tag 12 and stored in the cloud based system 16. A customer transaction receipt may be printed at a register 36.

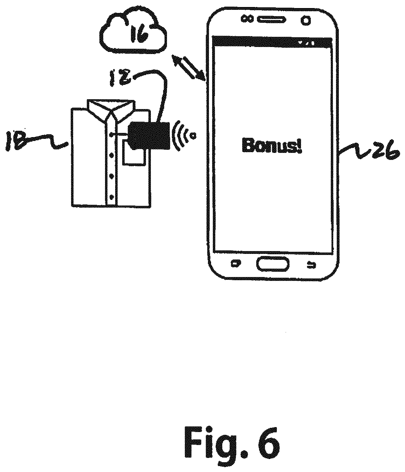

The purchaser then reads the RFID tag 12 with the NFC device 26 to enable communication with the cloud based system 16 through a Wi-Fi network, a mobile network, e.g. LTE, etc., and downloads data for post-purchase functionality, e.g., obtaining merchant or manufacturer loyalty reward points, product warranty registration, ordering replacement parts, obtaining extended service contracts, etc. as illustrated in FIG. 6.

It should be appreciated that although the foregoing description of the product data management system 10 referenced a single product 18 and a single RFID tag 12, for simplification, the product data management system 10 is intended for employment at retail shopping environments wherein a plurality of products are offered for sale, each having an RFID tag programmed with an electronic product identification code corresponding to the product to which it is attached.

The product data management system 10 may be employed in conjunction with automated or semi-automated retail establishments wherein sales are performed automatically through a mobile application.

Thus it will be seen that there is provided a product data management system which achieves the various aspects, features and considerations of the present invention and which is well suited for practical use.

All publications and references cited herein are expressly incorporated herein by reference in their entirety.

In the figures of this application, in some instances, a plurality of elements may be shown as illustrative of a particular element, and a single element may be shown as illustrative of a plurality of a particular elements. Showing a plurality of a particular element is not intended to imply that a system or method implemented in accordance with the invention must comprise more than one of that element or step, nor is it intended by illustrating a single element that the invention is limited to embodiments having only a single one of that respective element. Those skilled in the art will recognize that the numbers of a particular element shown in a drawing can, in at least some instances, be selected to accommodate the particular user needs.

The particular combinations of elements and features in the above-detailed embodiments are exemplary only; the interchanging and substitution of these teachings with other teachings in this and the incorporated-by-reference patents and applications are also expressly contemplated. As those skilled in the art will recognize, variations, modifications, and other implementations of what is described herein can occur to those of ordinary skill in the art without departing from the spirit and the scope of the invention as claimed.

Further, in describing the invention and in illustrating embodiments of the invention in the figures, specific terminology, numbers, dimensions, materials, etc., are used for the sake of clarity. However the invention is not limited to the specific terms, numbers, dimensions, materials, etc. so selected, and each specific term, number, dimension, material, etc., at least includes all technical and functional equivalents that operate in a similar manner to accomplish a similar purpose. Use of a given word, phrase, number, dimension, material, language terminology, product brand, etc. is intended to include all grammatical, literal, scientific, technical, and functional equivalents. The terminology used herein is for the purpose of description and not limitation.

Having described the preferred embodiments of the invention, it will now become apparent to one of ordinary skill in the art that other embodiments incorporating their concepts may be used. Moreover, those of ordinary skill in the art will appreciate that the embodiments of the invention described herein can be modified to accommodate and/or comply with changes and improvements in the applicable technology and standards referred to herein. For example, the technology can be implemented in many other, different, forms, and in many different environments, and the technology disclosed herein can be used in combination with other technologies. Variations, modifications, and other implementations of what is described herein can occur to those of ordinary skill in the art without departing from the spirit and the scope of the invention as claimed. It is felt therefore that these embodiments should not be limited to disclosed embodiments but rather should be limited only by the spirit and scope of the appended claims.

The particular combinations of elements and features in the above-detailed embodiments are exemplary only; the interchanging and substitution of these teachings with other teachings in this and the referenced patents/applications are also expressly contemplated. As those skilled in the art will recognize, variations, modifications, and other implementations of what is described herein can occur to those of ordinary skill in the art without departing from the spirit and the scope of the invention as claimed. Accordingly, the foregoing description is by way of example only and is not intended as limiting. The invention's scope is defined in the following claims and the equivalents thereto.

## Claims

1. A product data management system for a product situate in a retail selling environment, the system comprising an RFID tag affixed to the product, the RFID tag functioning at an NFC frequency and being programmed with an identification code corresponding to the product, the system further including one or more NFC smart devices carried by one or more prospective purchasers, the RFID tag being read by a prospective purchaser's NFC smart device to enable the prospective purchaser's NFC smart device to access pre-purchase product specific data stored in a cloud based system, the RFID tag enabling the NFC smart device access to post-purchase product specific functionality stored in the cloud based system only after the product has been purchased.

2. The product data management system in accordance with claim 1, wherein the RFID tag includes a UHF frequency component, the retail selling environment including UFC equipment for monitoring the RFID tag, the RFID tag being accessed by the UHF equipment within the retail selling environment for electronic article surveillance and/or inventory management, the UFC equipment transmitting electronic article surveillance and/or inventory management data to the cloud based system, the retail selling environment having a UHF disabling device for disabling the UHF frequency component at the point of purchase.

3. The product data management system in accordance with claim 1, wherein the post- purchase functionality comprises registration of the purchase in a loyalty purchase rewards program.

4. The product data management system in accordance with claim 1, wherein the post- purchase functionality comprises product warranty registration.

5. The product data management system in accordance with claim 1, wherein access to the post-purchase functionality is enabled only after purchase transaction data has been stored in the cloud based system.

6. The product data management system in accordance with claim 1, wherein a plurality of products are offered for sale at the retail selling environment, each having an RFID tag programmed with an electronic product code corresponding to the product to which it is attached.

7. A product data management system for a product situate in a retail selling environment, the system comprising an RFID tag, the RFID tag functioning at an NFC frequency, the RFID tag being programmed with an identification code corresponding to a product, the system further including one or more NFC smart devices carried by one or more prospective purchasers, the RFID tag being read by a prospective purchaser's NFC smart device to enable the prospective purchaser's NFC smart device to access pre-purchase product specific data stored in a cloud based system, the RFID tag enabling the NFC smart device access to post- purchase product specific functionality stored in the cloud based system only after the product has been purchased.

8. The product data management system in accordance with claim 7 further including the product, the RFID tag being affixed to the product.

9. The product data management system in accordance with claim 7, wherein the post- purchase functionality comprises registration of the purchase in a loyalty purchase rewards program.

10. The product data management system in accordance with claim 7, wherein the post- purchase functionality comprises product warranty registration.

11. A method of managing product data at a retail selling environment, the method comprising the steps of:
a) providing RFID tags operating at NFC frequencies for products offered for sale,
b) encoding each RFID tag with a product identification code,
c) attaching each RFID tag to a product corresponding to the product identification code,
d) storing, in a cloud based system, pre-purchase data corresponding to the product associated with the product identification code,
e) reading an RFID tag attached to a product with a prospective purchaser's NFC enabled smart device, and
f) retrieving, in the prospective purchaser's NFC enabled smart device, the pre-purchase data associated with the product identification code of the RFID tag which has been read.

12. The method of managing product data at a retail selling environment in accordance with claim 11 wherein step d) further includes storing, in the cloud based system, post-purchase functionality corresponding to the product associated with the product identification code, the method further including the steps of:
g) reading the RFID tag attached to a product which has been purchased with the purchaser's NFC enabled smart device, and
h) retrieving, in the purchaser's NFC enabled smart device, the post-purchase functionality associated with the product identification code of the RFID tag which has been read.

13. The method of managing product data at a retail selling environment in accordance with claim 11 wherein the step of attaching each RFID tag to a product corresponding to the product identification code is performed before the step of encoding each RFID tag with a product identification code.

14. The method of managing product data at a retail selling environment in accordance with claim 11 wherein the RFID tags include both a NFC component and a UHF frequency component, the method further including the step of:
g) providing electronic article surveillance by monitoring the RFID tags with UHF equipment within the retail selling environment.

15. The method of managing product data at a retail selling environment in accordance with claim 14 further including the step of:
h) providing inventory management by monitoring the RFID tags with UHF equipment within the retail selling environment.

16. The method of managing product data at a retail selling environment in accordance with claim 15 further including the step of:
i) disabling the UHF frequency component of the RFID tag attached to a product which has been purchased.

17. The method of managing product data at a retail selling environment in accordance with claim 15 further including the step of:
i) entering monitoring data retrieved by the UHF equipment in the cloud based system.

18. The method of managing product data at a retail selling environment in accordance with claim 12 further including the step of:
i) employing the retrieved post-purchase functionality to obtain loyalty rewards.

19. The method of managing product data at a retail selling environment in accordance with claim 12 further including the step of:
i) employing the retrieved post-purchase functionality for product warranty registration.

20. The method of managing product data at a retail selling environment in accordance with claim 11 further including the step of:
g) providing inventory management by monitoring the RFID tags with UHF equipment within the retail selling environment.
